# EUROPEAN PATENT APPLICATION

(11) **EP 2 224 610 A1**
(43) Date of publication of application: **01.09.2010**
(21) Application number: 08857869.5
(22) Date of filing: 08.12.2008
(51) Int. Cl.: H04B 7/08, H04N 5/44

(54) **DIVERSITY RECEPTION DEVICE AND DIVERSITY RECEPTION METHOD**

(30) Priority: 07.12.2007 JP 2007316913
(71) Applicant: Panasonic Corporation, Kadoma-shi Osaka 571-8501 (JP)
(72) Inventor: NISHIKAWA, Tomoki, Osaka 540-6207 (JP)
(74) Representative: Grünecker, Kinkeldey, Stockmair & Schwanhäusser Anwaltssozietät
(86) International application number: PCT/JP2008/003646
(87) International publication number: WO 2009/072306

(57) **Abstract**

A diversity receiver, which reduces power consumption while performing diversity reception properly, includes: a plurality of branches corresponding to a plurality of antennas, each configured to perform reception processing for a signal received by the corresponding antenna; a weighting coefficient generator configured to generate a weighting coefficient for each of the plurality of branches; a diversity combiner configured to perform diversity processing for signals subjected to the reception processing by the plurality of branches according to the weighting coefficients; and a determiner configured to determine a branch unnecessary for the diversity processing among the plurality of branches according to the weighting coefficients. At least one of elements included in the branch determined to be unnecessary for the diversity processing stop operation.

## Description

### TECHNICAL FIELD

The present disclosure relates to a diversity receiver and a diversity reception method for reception of radio signals using a plurality of antennas.

### BACKGROUND ART

In Japan, for example, TV broadcasting for mobile receivers such as cellular phones is already in service. The reception environments of mobile receivers are very bad for reasons such as that the receivers receive signals while moving and that the size of usable antennas is small. To allow a mobile receiver to receive broadcast programs and display them finely in such hostile reception environments, diversity reception techniques have been employed in which reception is made using a plurality of antennas.

Patent Document 1 describes a technique for diversity reception in which channel estimation is performed for propagation paths of signals received by a plurality of antennas, and weights are assigned to branches corresponding to the respective antennas according to the estimation results.

The diversity reception provides good reception quality but increases power consumption with a plurality of branches required. In particular, since many of mobile receivers are battery driven, increased power consumption leads to reduction in the duration of viewing of programs with the mobile receivers. It is therefore desirable to reduce power consumption during the diversity reception.

Patent Document 2 describes a technique in which, for reduction of power consumption, diversity combining is performed when the bit error rate (BER) exceeds a threshold. Patent Document 3 describes a technique in which diversity combining is performed when the carrier to noise ratio (C/N) is determined to be smaller than a threshold.
PATENT DOCUMENT 1: Japanese Patent Publication No. P2006-014027
PATENT DOCUMENT 2: Japanese Patent Publication No. P2006-311258
PATENT DOCUMENT 3: Japanese Patent Publication No. P2007-221640

### SUMMARY OF THE INVENTION

### TECHNICAL PROBLEM

In the techniques described in Patent Documents 2 and 3, since a time lag exists between diversity combining processing and subsequent BER or C/N determination processing, a correlation is not necessarily established between data actually used for diversity combining processing and determined BER or C/N values. For example, when a mobile receiver receives a signal while being in a moving high-speed train or automobile, it often occurs that the reception environments change in several milliseconds to several seconds. Therefore, whether or not to perform diversity combining cannot be determined correctly in some cases. For example, diversity combining may not be performed in an occasion where it should be performed, resulting in failure of proper reception.

A diversity receiver of the present invention can achieve reduction in power consumption while performing diversity reception properly.

### SOLUTION TO THE PROBLEM

The diversity receiver of an illustrative embodiment of the present invention includes: a plurality of branches corresponding to a plurality of antennas, each configured to perform reception processing for a signal received by the corresponding antenna; a weighting coefficient generator configured to generate a weighting coefficient for each of the plurality of branches; a diversity combiner configured to perform diversity processing for signals subjected the reception processing by the plurality of branches according to the weighting coefficients; and a determiner configured to determine a branch unnecessary for the diversity processing among the plurality of branches according to the weighting coefficients, wherein at least one of elements included in the branch determined to be unnecessary for the diversity processing stop operation.

According to the above diversity receiver, a branch unnecessary for diversity processing is determined according to the weighting coefficients for the branches used in normal diversity processing. Therefore, the timing at which the unnecessary branch should be stopped can be detected correctly and easily.

The diversity reception method of an illustrative embodiment of the present invention includes: performing reception processing, in each of a plurality of branches corresponding to a plurality of antennas, for a signal received by the corresponding antenna; generating a weighting coefficient for each of the plurality of branches; performing diversity processing for signals subjected to the reception processing by the plurality of branches according to the weighting coefficients; determining a branch unnecessary for the diversity processing among the plurality of branches according to the weighting coefficients; and stopping operation of at least one of elements included in the branch determined to be unnecessary for the diversity processing.

### ADVANTAGES OF THE INVENTION

According to the embodiment of the present invention, a branch unnecessary for diversity processing is determined according to the weighting coefficient for the branch. Since the weighting coefficient for a branch is the very value used in normal diversity processing, the timing at which the unnecessary branch should be stopped can be detected correctly. Therefore, it is possible to reduce power consumption while performing diversity reception properly.

### BRIEF DESCRIPTION OF THE DRAWINGS

[FIG. 1] FIG. 1 is a block diagram showing an example configuration of a diversity receiver of an embodiment of the present invention.
[FIG. 2] FIG. 2 is a view illustrating an example of a transmission format in a digital terrestrial TV broadcasting system.
[FIG. 3] FIG. 3 is a graph showing an example of the relationship between the fading frequency and the required C/N.
[FIG. 4] FIG. 4 is a flowchart showing an example of a basic control flow of the diversity receiver of FIG. 1.
[FIG. 5] FIG. 5 is a flowchart showing in detail an example of a control flow of the diversity receiver of FIG. 1.
[FIG. 6] FIG. 6 is a timing chart showing an example of determination of an unnecessary branch in a combining diversity scheme.
[FIG. 7] FIG. 7 is a flowchart showing an example of determination of an unnecessary branch in a selection diversity scheme.

### DESCRIPTION OF REFERENCE CHARACTERS

- 110, 130: Branch
- 116, 136: Synchronous Detector
- 142: Diversity Combiner
- 152: Fading/CW Detector
- 154: C/N Detector
- 156: Weighting Coefficient Generator
- 158: Determiner
- 162: Control Register

### DESCRIPTION OF EMBODIMENTS

An embodiment of the present invention will be described hereinafter with reference to the accompanying drawings. The functional blocks to be described herein can be typically implemented by hardware. For example, the functional blocks can be formed on a semiconductor substrate as part of an integrated circuit (IC). The IC as used herein includes a large-scale integrated circuit (LSI), an application-specific integrated circuit (ASIC), a gate array, a field programmable gate array (FPGA), and the like. Alternatively, some or all of the functional blocks may be implemented by software. For example, such a functional block can be implemented by a program executable on a processor. In other words, the functional blocks to be described herein may be implemented by hardware, by software, or by an arbitrary combination of hardware and software.

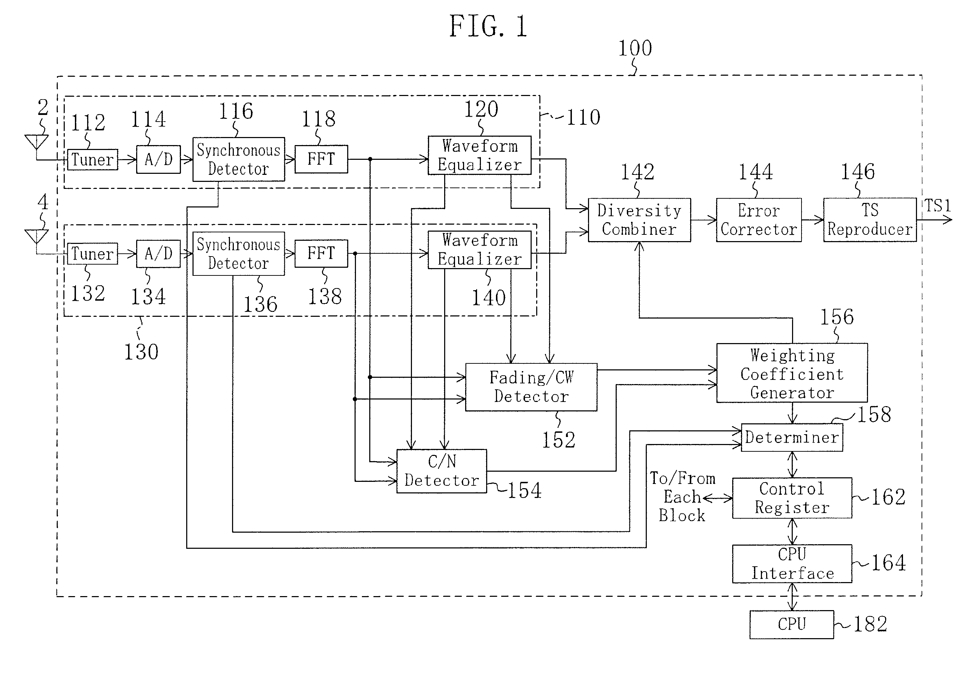

FIG. 1 is a block diagram showing an example configuration of a diversity receiver of an embodiment of the present invention. The diversity receiver 100 of FIG. 1 includes branches 110 and 130, a diversity combiner 142, an error corrector 144, a transport stream (TS) reproducer 146, a fading/continuous wave (CW) detector 152 as an interference detector, a carrier to noise ratio (C/N) detector 154, a weighting coefficient generator 156, a determiner 158, a control register 162, and a CPU interface 164.

The branch 110 includes a tuner 112, an A/D converter 114, a synchronous detector 116, a fast Fourier transformer 118, and a waveform equalizer 120. The branch 130 includes a tuner 132, an A/D converter 134, a synchronous detector 136, a fast Fourier transformer 138, and a waveform equalizer 140. The branches 110 and 130, respectively corresponding to antennas 2 and 4, perform reception processing for signals received by the corresponding antennas.

As an example, described will be reception of a radio signal of the orthogonal frequency division multiplexing (OFDM) scheme adopted in the digital terrestrial TV broadcasting in Japan, Europe, and other areas. The diversity receiver 100 may receive only one segment, for example, of a plurality of segments included in an OFDM signal, or may receive more of the segments.

The antennas 2 and 4 receive transmitted signals and feed the received signals to the tuners 112 and 132, respectively. The tuners 112 and 132 select a signal having a desired frequency among the fed signals and output the selected signal to the A/D converters 114 and 134, respectively. The A/D converters 114 and 134 A/D-convert the input signal and output the converted signal to the synchronous detectors 116 and 136, respectively.

The synchronous detectors 116 and 136 detect establishment of synchronization and the synchronization state. For example, when a pilot signal as a known signal is received at predetermined timing, this indicates that establishment of synchronization has been detected. The synchronous detectors 116 and 136 output the synchronized signal to the fast Fourier transformers 118 and 138, respectively, and also output the detected synchronization state to the determiner 158.

The fast Fourier transformers 118 and 138 perform fast Fourier transforms for the input signal. The fast Fourier transformer 118 outputs the transformed signal to the waveform equalizer 120, the fading/CW detector 152, and the C/N detector 154. The fast Fourier transformer 138 outputs the transformed signal to the waveform equalizer 140, the fading/CW detector 152, and the C/N detector 154.

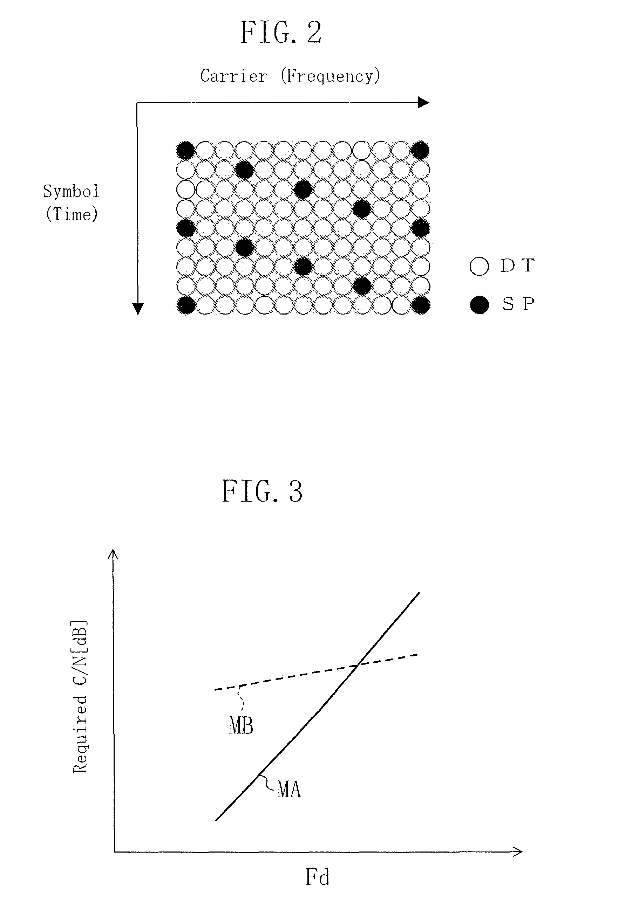

FIG. 2 is a view illustrating an example of a transmission format in the digital terrestrial TV broadcasting system. In OFDM, information such as video and audio is transmitted by a plurality of carriers orthogonal to each other. In general, in OFDM, scattered pilots (SPs) are transmitted in addition to data to be transmitted. In FIG. 2, white circles represent data carriers DTs and black circles represent SPs. Since the amplitude, phase, and insertion positions of SPs are known, the waveform equalizers 120 and 140 estimate an influence of distortion due to multipath and the like occurring on a transmission path (channel response) using the SPs, to remove the influence (i.e., perform equalization).

The waveform equalizers 120 and 140 determine channel responses corresponding to the known SPs from the fast Fourier transformed signal in the frequency domain. The waveform equalizers 120 and 140 then perform interpolation, with a filter, between channel responses corresponding to a plurality of SPs selected according to a predetermined rule, estimating channel responses corresponding to data carriers DTs between the SPs, and equalize (e.g., divide) the OFDM signal in the frequency domain by the estimated channel responses. The combination of the rule for selection of a plurality of SPs and the filter used for interpolation is herein referred to as the waveform equalization mode.

As the filter, a finite impulse response (FIR) filter, for example, is used. Filters having various tap coefficients and number of taps may be used. By selecting the waveform equalization mode according to the reception environments, the reception characteristics can be kept from changing largely. The waveform equalizers 120 and 140 equalize waveforms according to their waveform equalization modes and output the equalized signals to the diversity combiner 142.

The diversity combiner 142 performs diversity processing for the outputs of the waveform equalizers 120 and 140 according to weighting coefficients for these branches calculated by the weighting coefficient generator 156, and outputs the result to the error corrector 144. In other words, the diversity combiner 142 multiplies the outputs of the waveform equalizers 120 and 140 by the respective weighting coefficients calculated by the weighting coefficient generator 156, and sums the two multiplied values.

The diversity combiner 142 can perform both combining diversity of combining signals from the branches and selection diversity of selecting a branch best in reception condition, using the weighting coefficients. The diversity processing as used herein includes both the combining diversity and the selection diversity.

The error corrector 144 performs error correction for the input signal and outputs the resultant signal to the TS reproducer 146. The TS reproducer 146 converts the input signal to a transport stream TS1.

The fading/CW detector 152 calculates the levels of interference using at least one of the signals after the fast Fourier transform, the signals after the waveform equalization, signals under the waveform equalization by the waveform equalizers 120 and 140, or the like, and outputs the results to the weighting coefficient generator 156. The level of interference is fading interference level or CW interference level, for example. The C/N detector 154 calculates the C/Ns of the signals received by the antennas 2 and 4 using at least one of the signals after the fast Fourier transform, the signals after the waveform equalization, signals under the waveform equalization by the waveform equalizers 120 and 140, or the like, and outputs the results to the weighting coefficient generator 156. The fading/CW detector 152 and the C/N detector 154 may calculate the level of interference and the C/N, respectively, by other methods.

FIG. 3 is a graph showing an example of the relationship between the fading frequency and the required C/N. While the conditions such as additive white Gaussian noise (AWGN), multipath, and fading vary depending on the reception environments and the channel responses also vary depending on the reception environments, the estimated results of the channel responses vary with the waveform equalization mode. Therefore, as shown in FIG. 3, the curve representing the required C/N varies with the waveform equalization mode. That is, for waveform equalization mode MA, the required C/N is low when the fading frequency Fd is low but increases abruptly with increase of the fading frequency Fd. For waveform equalization mode MB, the required C/N increases mildly with increase of the fading frequency Fd.

To allow comparison between branches adopting different waveform equalization modes, the weighting coefficient generator 156 adds a correction value corresponding to the difference in required C/N between different waveform equalization modes to the weighting coefficients for the branches. For example, when the fading frequency Fd is high, a branch adopting the waveform equalization mode MB is lower in required C/N than a branch adopting the waveform equalization mode MA. Therefore, the weighting coefficient generator 156 performs addition of a correction value and the like to increase the weighting coefficient for the branch adopting the waveform equalization mode MB.

The weighting coefficient generator 156 generates weighting coefficients for the branches 110 and 130 using only C/N determined by the C/N detector 154, or both C/N and the level of interference determined by the fading/CW detector 152, and outputs the results to the diversity combiner 142 and the determiner 158. For example, the weighting coefficient generator 156 calculates the logarithm of C/N for each branch, and adds a correction value corresponding to the waveform equalization mode and the fading frequency representing the level of interference to the calculated logarithm, to determine the resultant value as the weighting coefficient for the branch. As the correction value for each branch, a value with which the influence of the difference in waveform equalization mode will be reduced may be used. As a simpler way, a constant corresponding to each waveform equalization mode may be used as the correction value.

The weighting coefficient generator 156 may calculate the ratio of the weighting coefficient for the branch 110 to the weighting coefficient for the branch 130 as the combining ratio. In this case, the diversity combiner 142 weights the output of the waveform equalizer 120 and the output of the waveform equalizer 140 so that the ratio between the weighted outputs is equal to the combining ratio calculated by the weighting coefficient generator 156.

The control register 162 is a register capable of storing flags and values, into and from which data can be written and read by the blocks of the diversity receiver 100. The determiner 158 determines a branch unnecessary for diversity processing (unnecessary branch), from the branches 110 and 130, according to the weighting coefficients for the branches 110 and 130, and sets an unnecessary branch flag indicating a branch determined as an unnecessary branch in the control register 162.

In the control register 162, a flag indicating the determination time period and thresholds for C/N and the weighting coefficient can be set. The blocks of the diversity receiver 100 allow the control register 162 to store their statuses therein. The status of each block includes, for example, whether or not power supply to the block is on, whether or not the block is under operation, whether or not synchronization has been established, the unnecessary branch flag, the weighting coefficient, the bit error rate (BER), C/N, the waveform equalization mode, and the like.

A CPU 182 located outside the diversity receiver 100 executes software and writes/reads data into/from the control register 162 via the CPU interface 164. Therefore, processing corresponding to the statuses of the blocks stored in the control register 162 can be implemented by software. Although the CPU 182 is described as being outside the diversity receiver 100, it may be included in the diversity receiver 100. Otherwise, the diversity receiver 100 may have a sequencer that operates similarly to the CPU 182, in place of the CPU 182.

The CPU 182 and the like set the control register 162 to indicate which to be performed, combining or selection, as the diversity processing. The weighting coefficient generator 156 generates weighting coefficients for the branches 110 and 130 so that combining of signals after the reception processing by the branches 110 and 130 or selection from these signals is performed according to the setting in the control register 162.

A flag on whether or not to perform diversity processing may be set in the control register 162. If diversity processing is not performed, arrangement may be made not to perform operation such as determination of an unnecessary branch, and thus the diversity receiver 100 can be used for a variety of purposes. Also, the blocks of the diversity receiver 100 can read the setting in the control register 162 and stop/restart their operations according to the setting.

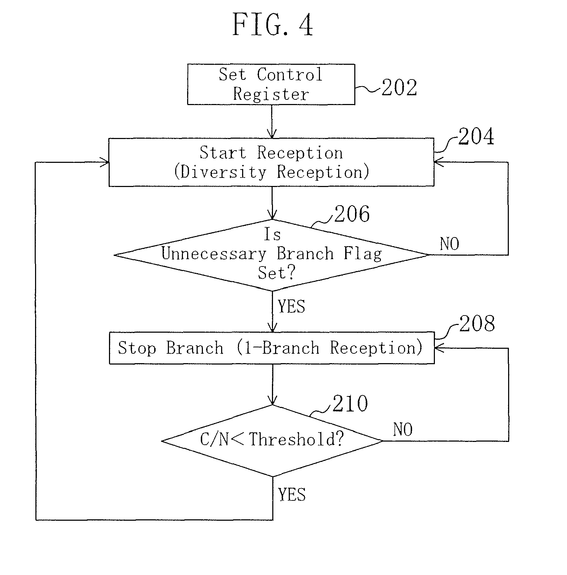

FIG. 4 is a flowchart showing an example of a basic control flow of the diversity receiver 100 of FIG. 1. First, at 202 in FIG. 4, the blocks included in the diversity receiver 100 or the CPU 182 sets the control register 162 so that the branches operate. The determiner 158 determines whether or not each branch is an unnecessary branch according to the weighting coefficient and information from the control register 162, and sets an unnecessary branch flag in the control register 162. At 204, the diversity receiver 100 performs diversity reception according to the setting in the control register 162.

At 206, the CPU 182 reads data in the control register 162 via the CPU interface 164 to determine whether or not an unnecessary branch flag has been set. The process proceeds to 208 if an unnecessary branch flag has been set, or otherwise returns to 204. At 208, the CPU 182 stops an unnecessary branch according to the unnecessary branch flag. With this stop, a receiver having, e.g., two branches similar to the diversity receiver 100 will perform reception with only one branch.

At 210, the CPU 182 determines whether or not to restart the operation of the branch that has been stopped. If it is determined that the operation should be restarted, the process returns to 204, where the CPU 182 restarts the operation of the branch that has been stopped, resuming diversity reception. If it is not determined that the operation should be restarted, the process returns to 208, continuing reception with only one branch. Specifically, for example, at 210, the CPU 182 reads C/N from the control register 162 via the CPU interface 164, determines whether or not the C/N is less than a predetermined threshold, and determines that the operation of the branch stopped should be restarted if the C/N is less than the threshold.

The CPU 182 may otherwise determine that the operation of the branch stopped should be restarted once a predetermined time has passed since the stop of the branch. Alternatively, if the C/N is less than the threshold and establishment of synchronization of the branch under operation is no more detected, then the CPU 182 may determine that the operation of the branch stopped should be restarted. Although some examples of the determination criteria at 210 have been described, determination may be made according to other criteria.

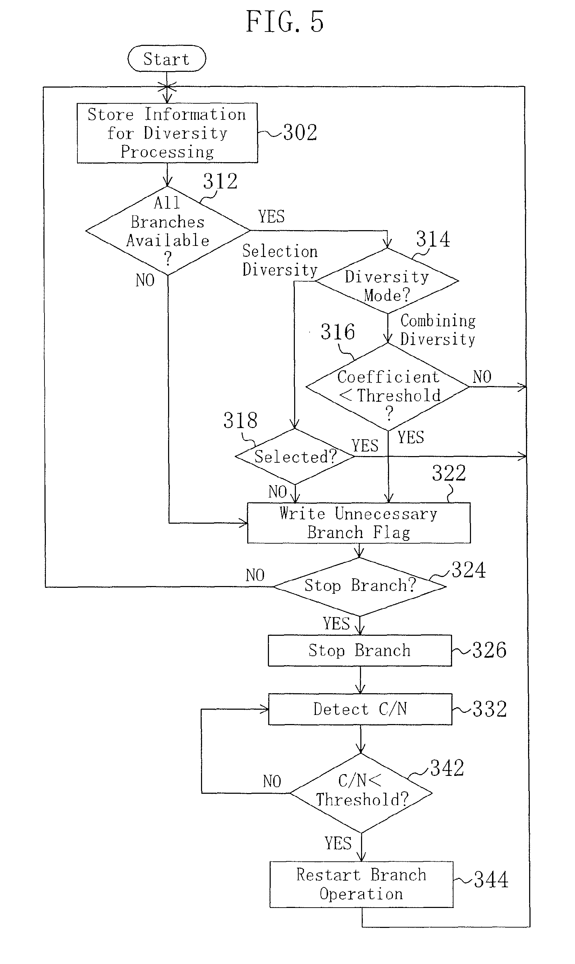

FIG. 5 is a flowchart showing, in detail, an example of a control flow of the diversity receiver 100 of FIG. 1. At 302 in FIG. 5, the blocks of the diversity receiver 100 allow the control register 162 to store their statuses and the like therein as information for diversity processing. At this time, the weighting coefficient generator 156 outputs the weighting coefficients for the branches 110 and 130 to the control register 162 to be stored therein and also to the diversity combiner 142 and the determiner 158.

At 312, the determiner 158 determines whether or not all the branches are available from the information stored at 302. If a branch meets at least one of conditions, including stop of power supply to the branch, stop of operation of a block included in the branch, and failure in detection of establishment of synchronization by the synchronous detector of the branch, the determiner 158 determines that the branch in question is unavailable and hence is an unnecessary branch for diversity processing. The process proceeds to 314 if all the branches are determined to be available, or otherwise proceeds to 322. At 314, the determiner 158 determines the diversity scheme set in the control register 162. The process proceeds to 316 if the combining diversity scheme is set, or proceeds to 318 if the selection diversity scheme is set.

At 316, the determiner 158 determines whether or not each branch is an unnecessary branch from the weighting coefficient and the information stored at 302. The process proceeds to 322 if there is a branch determined as an unnecessary branch, or otherwise returns to 302. The determiner 158 determines any of the following branches as an unnecessary branch:
(A1) a branch for which the weighting coefficient is always 0 during a determination time period,
(A2) a branch for which the weighting coefficient is always smaller than a threshold during a determination time period,
(A3) a branch to which power supply is stopped,
(A4) a branch for which synchronization has not been established, and
(A5) a branch a block of which is in a halt state.

The determiner 158 may also determine the following branch as an unnecessary branch:
(A6) a branch in which C/N is always smaller than a threshold during a determination time period.

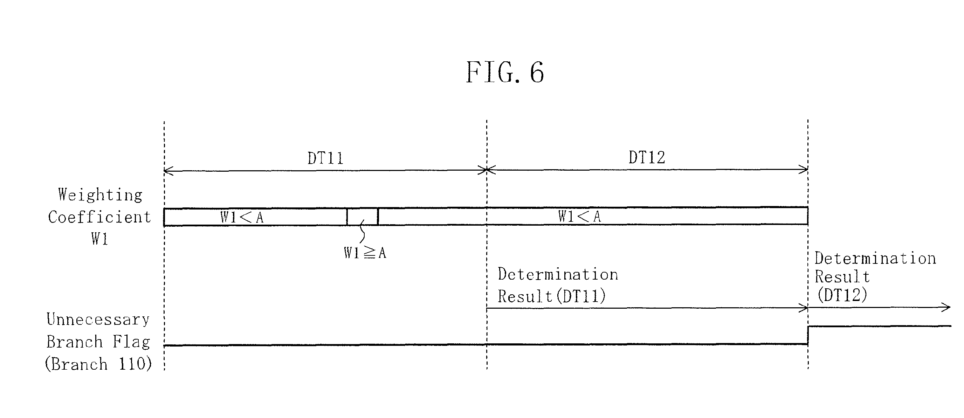

FIG. 6 is a timing chart showing an example of determination of an unnecessary branch in the combining diversity scheme. Assume in this example that the branch 110 does not meet any of (A3) to (A6) above.

During determination time period DT11, the weighting coefficient W1 for the branch 110 is first a value less than a threshold A, then becomes a value equal to or more than the threshold A temporarily, and thereafter becomes a value less than the threshold A. Therefore, meeting neither (A1) nor (A2), the branch 110 is not determined as an unnecessary branch, and thus the unnecessary branch flag for the branch 110 remains "L" during next determination time period DT12.

During the determination time period DT12, the weighting coefficient W1 for the branch 110 is always a value less than the threshold A. Therefore, meeting (A2), the branch 110 is determined as an unnecessary branch, and thus the unnecessary branch flag for the branch 110 goes "H" during the next determination time period. In this way, when the weighting coefficient for a branch is always less than a threshold A during a determination time period, the determiner 158 determines the branch as an unnecessary branch.

The threshold A may be 0. That is, the determiner 158 may determine a branch for which the weighting coefficient is always 0 as an unnecessary branch. Hence, determination of an unnecessary branch can be achieved by setting the weighting coefficient, the threshold for the weighting coefficient, and the determination time period.

At 318 in FIG. 5, the determiner 158 determines whether or not each branch is an unnecessary branch from the information stored at 302. The process proceeds to 322 if there is a branch determined as an unnecessary branch, or otherwise returns to 302. The determiner 158 determines any of the following branches as an unnecessary branch:
(B1) a branch never selected during a determination time period,
(B2) a branch to which power supply is stopped,
(B3) a branch for which synchronization has not been established, and
(B4) a branch a block of which is in a halt state.

The determiner 158 may also determine the following branch as an unnecessary branch:
(B5) a branch in which C/N is always smaller than a threshold during a determination time period.

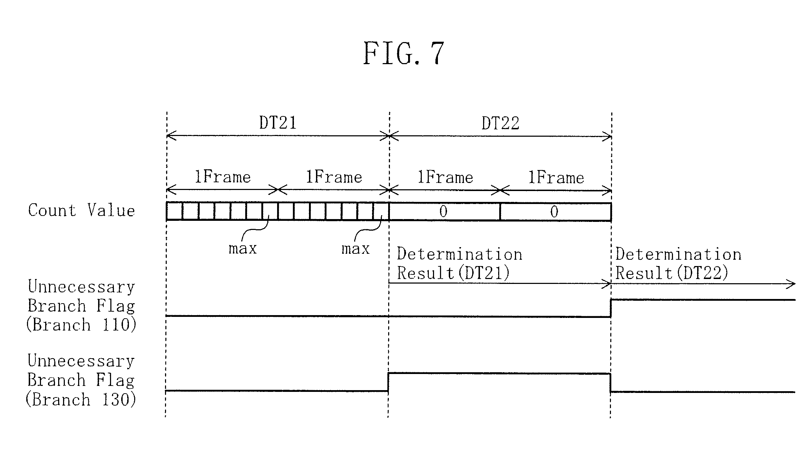

FIG. 7 is a timing chart showing an example of determination of an unnecessary branch in the selection diversity scheme. Assume in this example that the branches 110 and 130 do not meet any of (B2) to (B5) above.

Assume that the branch 110 is being selected during determination time period DT21. During this time, the counter of the determiner 158 continues counting up, and, when the count value reaches a maximum value max at the end of one frame, restarts counting up from 0. Since the count value has reached the maximum value max at the end of one frame, the determiner 158 determines that the branch 110 has been selected, and thus the unnecessary branch flag for the branch 110 remains "L" during next determination time period DT22. Also, since the count value has never been 0 at the end of one frame, the determiner 158 determines that the branch 130 has not been selected, and thus the unnecessary branch flag for the branch 130 goes "H" during the determination time period DT22.

Assume that the branch 110 is not being selected during the determination time period DT22. During this time, the counter of the determiner 158 does not count up. Since the count value has not reached the maximum value max at the end of one frame, the determiner 158 determines that the branch 110 has not been selected, and thus the unnecessary branch flag for the branch 110 goes "H" during the next determination time period. Also, since the count value has been 0 at the end of one frame at least once, the determiner 158 determines that the branch 130 has been selected, and thus the unnecessary branch flag for the branch 130 goes "L" during the next determination time period. In other words, the determiner 158 determines a branch that has never been selected during a determination time period as an unnecessary branch.

At 322 in FIG. 5, the determiner 158 writes an unnecessary branch flag indicating a branch determined as an unnecessary branch in the control register 162. At 324, the CPU 182 reads data in the control register 162 via the CPU interface 164 and determines whether or not to stop a branch, i.e., whether or not an unnecessary branch flag has been set. The process proceeds to 326 if an unnecessary branch flag has been set, or otherwise returns to 302. At 324, the CPU 182 may determine stop of a branch also considering other indicators such as BER. For a branch for which no unnecessary branch flag has been set, processing similar to that at 302 to 322 described above is repeated.

At 326, the CPU 182 stops an unnecessary branch according to an unnecessary branch flag. For example, the CPU 182 writes a flag that indicates stop of an unnecessary branch in the control register 162, and at least one of elements such as blocks included in the unnecessary branch stop operation according to the flag set in the control register 162.

The following blocks may be considered as examples of the elements of which operation is stopped in the unnecessary branch:
(S1) fast Fourier transformer 118, 138, and waveform equalizer 120, 140,
(S2) synchronous detector 116, 136 in addition to (S1),
(S3) A/D converter 114, 134 in addition to (S2), and
(S4) tuner 112, 132 in addition to (S3).

In the case of (S1), setting can be made so that operation will not be restarted unless establishment of synchronization is detected. The smaller the number of elements of which operation is stopped, the shorter it is to restart the operation of the branch, but the larger the power consumption is.

At 332, the C/N detector 154 determines C/N during a predetermined determination time period, and writes the determined C/N in the control register 162. When there are plural branches that are not stopped, in which case the diversity combining is continuing, the C/N detector 154 determines the C/N of the diversity combined signal. When there is only one branch that is not stopped, the C/N detector 154 determines the C/N for the unstopped branch.

At 342, the CPU 182 determines whether or not C/N is less than a predetermined threshold. The process proceeds to 344 if C/N is less than a predetermined threshold, or otherwise returns to 322. At 342, similar to 210 in FIG. 4, the determination may be made according to other determination criteria. At 344, since C/N is less than the predetermined threshold, the CPU 182 allows the branch stopped to restart its operation, and the diversity receiver 100 restarts diversity reception using the restarted branch. At this time, the determiner 158 is initialized. The process then returns to 302, repeating the flow of processing described above.

As described above, in this embodiment, a branch unnecessary for diversity processing is determined according to the very information actually used at the time of the diversity processing, such as the weighting coefficient. Thus, the timing at which an unnecessary branch should be stopped can be detected correctly and easily. It is therefore possible to reduce power consumption while performing diversity reception properly.

In this embodiment, the CPU 182 was used to perform stop and restart of operation of branches. Alternatively, such processing may be made by hardware, and such hardware and the CPU 182 may be placed inside the diversity receiver 100.

In this embodiment, the diversity receiver 100 having two branches was described. Alternatively, three or more branches may be provided, and in this case, also, the above description applies.

In this embodiment, the diversity receiver 100 receiving a signal of the OFDM scheme was described. The diversity receiver 100 can also receive a signal of any other scheme in substantially the same manner as long as the signal includes a pilot signal transmitted at predetermined timing.

Many features and advantages of the present invention are obvious from the above description, and hence it is intended to cover all of such features and advantages of the present invention by the appended claims. As many changes and modifications can be easily made by those skilled in the art, the present invention should not be limited to the constructions and operations identical to those illustrated and described herein. Accordingly, it is to be understood that all appropriate modifications and equivalents fall within the scope of the present invention.

### INDUSTRIAL APPLICABILITY

As described above, according to the embodiment of the present invention, it is possible to reduce power consumption while performing diversity reception properly. Thus, the present invention is useful for a diversity receiver and the like.

## Claims

1. A diversity receiver, comprising:
a plurality of branches corresponding to a plurality of antennas, each configured to perform reception processing for a signal received by the corresponding antenna;
a weighting coefficient generator configured to generate a weighting coefficient for each of the plurality of branches;
a diversity combiner configured to perform diversity processing for signals subjected the reception processing by the plurality of branches according to the weighting coefficients; and
a determiner configured to determine a branch unnecessary for the diversity processing among the plurality of branches according to the weighting coefficients,
wherein
at least one of elements included in the branch determined to be unnecessary for the diversity processing stop operation.

2. The receiver of claim 1, further comprising:
a C/N detector configured to determine a carrier to noise ratio (C/N) of each of signals received by the plurality of antennas,
wherein
the weighting coefficient generator generates the weighting coefficient for each of the plurality of branches according to C/N determined by the C/N detector.

3. The receiver of claim 1, further comprising:
an interference detector configured to determine the level of interference in each of signals received by the plurality of antennas,
wherein
the weighting coefficient generator generates the weighting coefficient for each of the plurality of branches according to the level of interference determined by the interference detector.

4. The receiver of claim 1, wherein
each of the plurality of branches has a synchronous detector configured to detect whether or not synchronization of a signal received by the corresponding antenna has been established, and
the determiner performs the determination according to the detection results of the synchronous detectors of the plurality of branches.

5. The receiver of claim 1, further comprising:
a control register,
wherein
the determiner sets the control register so as to indicate a branch determined to be unnecessary for the diversity processing, and
the at least one of elements included in the branch determined to be unnecessary for the diversity processing stop operation according to the setting in the control register.

6. The receiver of claim 5, wherein
the control register is set so as to indicate which should be performed, combining or selection, and
the weighting coefficient generator generates the weighting coefficients so that combining of signals subjected to the reception processing by the plurality of branches, or selection from signals subjected to the reception processing by the plurality of branches, is performed according to the setting in the control register.

7. The receiver of claim 6, wherein
the determiner determines a branch for which the weighting coefficient generated by the weighting coefficient generator is always less than a threshold during a determination time period as a branch unnecessary for the diversity processing in the case that the control register is set so that combining should be performed.

8. The receiver of claim 7, wherein
the threshold is 0.

9. The receiver of claim 6, wherein
each of the plurality of branches has a synchronous detector configured to detect whether or not synchronization of a signal received by the corresponding antenna has been established, and
the determiner determines a branch of which the synchronous detector has not detected establishment of synchronization as a branch unnecessary for the diversity processing in the case that the control register is set so that combining should be performed.

10. The receiver of claim 6, wherein
the determiner determines a branch that has not been selected during a determination time period as a branch unnecessary for the diversity processing in the case that the control register is set so that selection should be performed.

11. The receiver of claim 5, further comprising:
a C/N detector configured to determine C/N of each of signals received by the plurality of antennas,
wherein
the determiner determines a branch for which the C/N determined by the C/N detector is always less than a threshold during a determination time period as a branch unnecessary for the diversity processing in the case that the control register is set so that selection should be performed.

12. The receiver of claim 5, further comprising:
a CPU configured to stop the at least one of elements included in the branch determined to be unnecessary for the diversity processing according to the setting in the control register.

13. The receiver of claim 1, wherein
when the received signal of the branch determined to be unnecessary for the diversity processing satisfies a predetermined condition, the diversity combiner restarts diversity processing using the branch satisfying the predetermined condition.

14. The receiver of claim 13, wherein
each of the plurality of branches has a C/N detector configured to determine C/N of the signal received by the corresponding antenna, and
the predetermined condition is that the C/N of the received signal exceeds a threshold.

15. A diversity reception method comprising:
performing reception processing, in each of a plurality of branches corresponding to a plurality of antennas, for a signal received by the corresponding antenna;
generating a weighting coefficient for each of the plurality of branches;
performing diversity processing for signals subjected to the reception processing by the plurality of branches according to the weighting coefficients;
determining a branch unnecessary for the diversity processing among the plurality of branches according to the weighting coefficients; and
stopping operation of at least one of elements included in the branch determined to be unnecessary for the diversity processing.
